# EUROPEAN PATENT APPLICATION

(11) **EP 2 006 187 A2**
(43) Date of publication of application: **24.12.2008**
(21) Application number: 08158548.1
(22) Date of filing: 19.06.2008
(51) Int. Cl.: B62D 5/22

(54) **Steering assembly for pairs of vehicle wheels**

(30) Priority: 22.06.2007 IT MO20070213
(71) Applicant: Borghi Ivan S.n.c. di Borghi Ivan E C., 41030 Bomporto (MO) (IT)
(72) Inventor: Borghi, Ivan, 41030, Fraz. Villavara - Bomporto (MO) (IT)
(74) Representative: Brogi, Graziano

(57) **Abstract**

The steering assembly for pairs of vehicle wheels comprises an axle having two opposite ends associable with rotation means for rotating two spindles supporting two or more vehicle wheels, and a jack for actuating the rotation of the spindles, having an outer liner associable with the axle and a stem which can be fitted in the outer liner and can be operated by fluid under pressure, the axle and the outer liner each being made of a single monolithic body.

## Description

### Technical Field

The present invention relates to a steering assembly for pairs of vehicle wheels.

### Background Art

As is known, land vehicles that move on wheels have steering assemblies suitable for turning the direction wheels of the means of transport.

With particular, but not exclusive, reference to land vehicles with four or more wheels (e.g., cars, lorries, etc..) the steering assemblies are usually designed to direct two wheels at the same time.

For this purpose, various movement systems are known, of the mechanical and/or hydraulic type.

A particular type of steering assembly for wheel pairs consists in a horizontal axle, at the ends of which the spindles are articulated that support the steering wheels.

With the axle is associated a double-acting hydraulic jack designed to start the wheels turning.

The jack has an outer liner which is fitted on the axle by means of a traditional system of screws, bolts or other threaded connecting parts, which are fitted inside special brackets obtained on the liner and/or on the axle.

Inside the liner runs the jack stem, the ends of which protrude from the liner and are associated with the spindles.

The longitudinal sliding of the stem makes it possible to turn the spindles and, therefore, the wheels fitted on them.

This particular type of steering assembly has a number of drawbacks tied to the need to fit the jack liner on the axle bearing the wheels.

This fitting phase, in fact, requires some considerable time to complete and, consequently, affects the overall costs of fabrication that negatively affect the final price of the steering assembly.

This assembly operation, on the other hand, is not always performed in practical and easy conditions because the overall dimensions and the conformation of the axle and of the liner often hinder the use of the tools required to tighten up the threaded connecting parts.

It must also be emphasised that the above assembly difficulties and any alignment defects affecting the brackets and the threaded parts can lead to fitting imprecisions which could cause the faulty operation of the steering assembly during use.

### Object of the Invention

The main aim of the present invention is to provide a steering assembly for pairs of vehicle wheels that is particularly easy from a constructive viewpoint, practical to make and with limited overall dimensions.

A further object of the present invention is to make it possible to cut overall production costs, thus being particularly advantageous from an economical viewpoint if compared to traditional steering assemblies.

Another object of the present invention is to provide a steering assembly for pairs of vehicle wheels that allows to overcome the mentioned drawbacks of the known technique within the ambit of a simple and rational solution, which is easy and effective to use.

The above objects are achieved by the present steering assembly for pairs of vehicle wheels, comprising at least one axle having two opposite ends associable with rotation means for rotating two spindles supporting at least two vehicle wheels, and at least one jack for actuating the rotation of said spindles, having at least one outer liner associable with said axle and at least one stem which can be fitted in said outer liner and can be operated by fluid under pressure, characterized by the fact that said axle and said outer liner are made of a single monolithic body.

### Brief Description of the Drawings

Further characteristics and advantages of the present invention will appear more evident from the description of some preferred, but not exclusive, embodiments of a steering assembly for pairs of vehicle wheels, illustrated indicatively by way of non limiting example in the accompanying drawings, wherein:
figure 1 is an exploded, schematic and partial view of a preferred embodiment of the steering assembly according to the invention;
figure 2 is a plan and partially in section view of the steering assembly of figure 1;
figure 3 is an axonometric view of a detail of an alternative embodiment of the steering assembly according to the invention;
figure 4 is an axonometric view of the steering assembly of figure 3.

### Embodiments of the Invention

With particular reference to such figures, a steering assembly for pairs of vehicle wheels has been globally indicated by 1.

The steering assembly 1 comprises an axle 2 that extends in a longitudinal direction.

During use, the axle 2 is intended for being mounted on a vehicle so the longitudinal direction of the axle 2 is at right angles to the normal direction of forward movement of the vehicle.

The axle 2 has two opposite ends 3a, 3b, which are associable with rotation means 4 for rotating two spindles 5a, 5b supporting two corresponding wheels R.

The rotation means 4, in particular, consist of a pair of transversal pins 6a, 6b, each of which is associable with an end 3a, 3b of the axle 2.

For this purpose, the ends 3a, 3b of the axle 2 are fork shaped and have holes 7a, 7b for fitting the transversal pins 6a, 6b.

Advantageously, in fitting configuration the transversal pins 6a, 6b are substantially at right angles to the longitudinal direction of the axle 2 and intended to be arranged substantially vertical once fitted on the vehicle.

Around the transversal pins 6a, 6b are associated in a turning way the spindles 5a, 5b.

In the particular embodiments of the invention shown in the figures, the spindles 5a, 5b are suitable for supporting just one wheel R each; alternative embodiments cannot however be ruled out in which each spindle 5a, 5b can be sized and made ready for fitting two or more aligned wheels R.

The steering assembly 1 also comprises a jack 8 of the double-acting fluid type, suitable for driving the rotation of the spindles 5a, 5b around the transversal pins 6a, 6b.

The jack 8 consists of an outer liner 9 associated with the axle 2 and of a stem 10 that can be fitted in the outer liner 9 and can be driven by a fluid under pressure.

Usefully, the axle 2 and the outer liner 9 are made in a single monolithic body and, in particular, consist in a die casting.

The outer liner 9 is arranged substantially parallel to the longitudinal direction of the axle 2 and is composed of a tubular body having open ends 11a, 11b.

With the open ends 11a, 11b are associable two corresponding closing covers 12a, 12b.

The closing covers 12a, 12b can be fixed to the outer liner 9 by means of a series of screws 13 and have mouths 14a, 14b inside which the stem 10 is able to slide to measure.

Close to the open ends 11a, 11b, on the outer liner 9 two through passage openings 15 are obtained for the flow of the fluid under pressure.

The stem 10 comprises a rod that can be fitted longitudinally inside the outer liner 9 and protruding from the open ends 11a, 11b through the mouths 14a, 14b of the closing covers 12a, 12b.

Furthermore, the stem 10 comprises an enlarged portion 16 which is arranged at the median section of the rod 10 and is sliding to measure inside the outer liner 9.

The ends 17a, 17b of the stem 10 are associable with the spindles 5a, 5b by interposition of at least two connecting rods 18a, 18b.

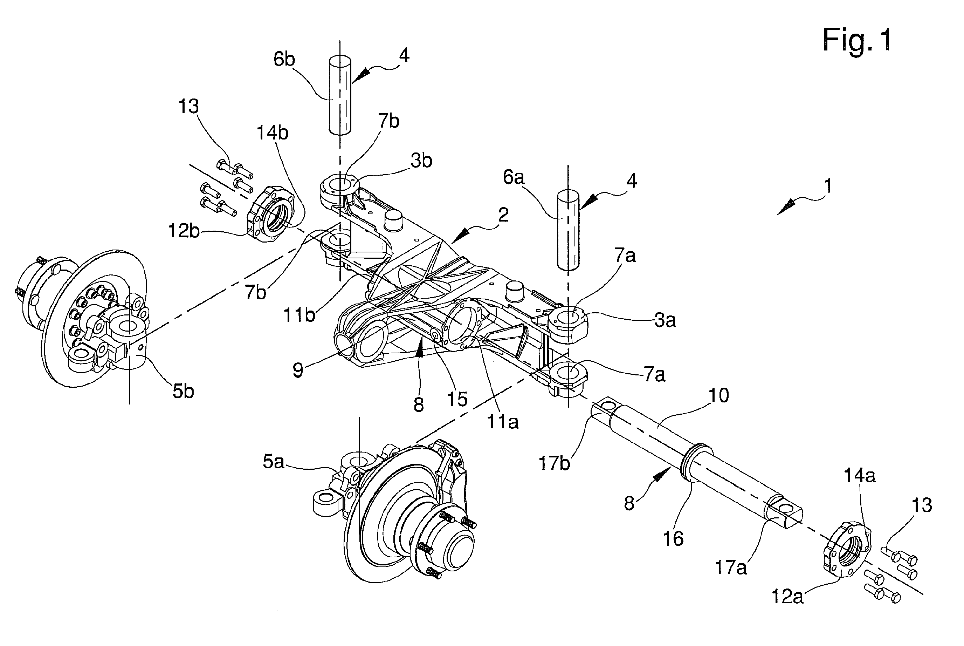

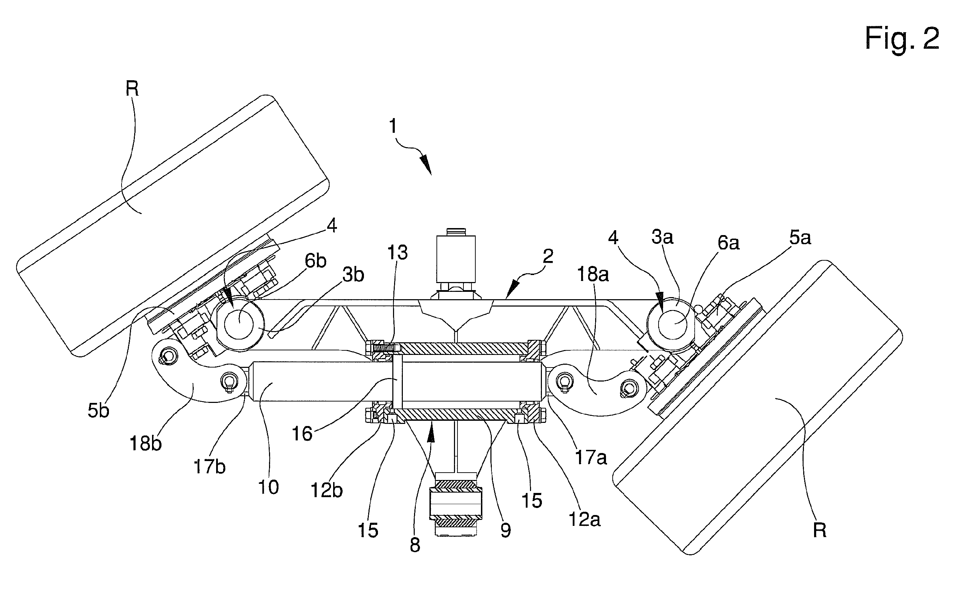

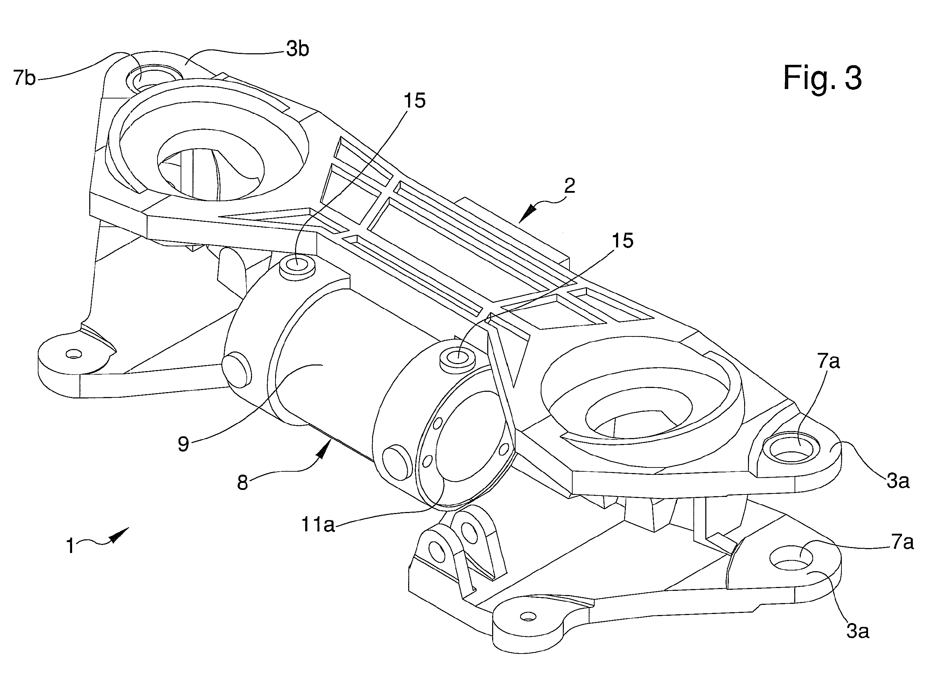

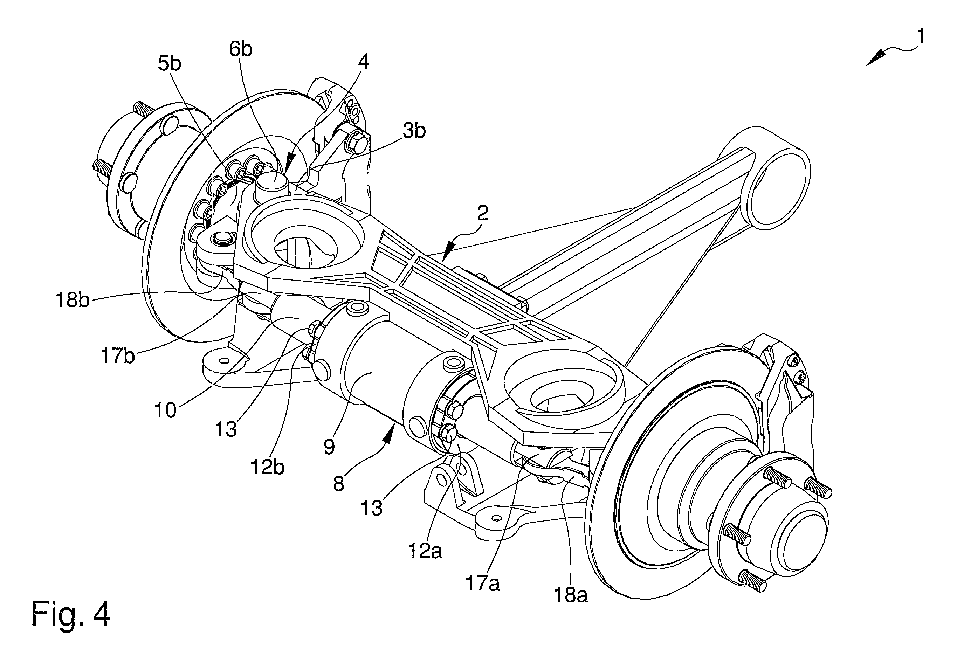

The figures 1-2 and 3-4 illustrate two embodiments of the present invention respectively, in which the axle 2 and the outer liner 9 of the jack 8 are made in a single monolithic body and which only differ in terms of small construction specifications.

It has in point of fact being ascertained how the described invention achieves the proposed objects.

The particular solution of using an axle and a liner obtained by casting in a single monolithic body, in fact, allows considerably simplifying the assembly operations, with an obvious reduction in overall costs and in the end price of the steering assembly.

It is further emphasised that the present invention requires neither threaded parts nor particular connection brackets to be placed between the axle and the liner of the jack, as is the case with traditional steering assemblies.

This peculiarity permits reducing the overall dimensions of the steering assembly, which is also more lightweight and easier to handle.

Finally, it should not be forgotten that the presence of an axle and of a liner made in a single body in no way complicates maintenance jobs on the steering assembly, which can be performed in a practical, easy and functional way.

The invention thus conceived is susceptible to numerous modifications and variations, all of which falling within the scope of the inventive concept.

Furthermore all the details can be replaced with others that are technically equivalent.

In practice, the materials used, as well as the contingent shapes and dimensions, may be any according to requirements without because of this moving outside the protection scope of the following claims.

## Claims

1. Steering assembly for pairs of vehicle wheels, comprising at least one axle having two opposite ends associable with rotation means for rotating two spindles supporting at least two vehicle wheels, and at least one jack for actuating the rotation of said spindles, having at least one outer liner associable with said axle and at least one stem which can be fitted in said outer liner and can be operated by fluid under pressure, **characterized by** the fact that said axle and said outer liner are made of a single monolithic body.

2. Steering assembly according to claim 1, wherein said axle and said outer liner are a die casting.

3. Steering assembly according to one or more of the preceding claims, wherein said jack is of the double-acting type.

4. Steering assembly according to one or more of the preceding claims, wherein said outer liner is arranged substantially parallel to the longitudinal direction of said axle.

5. Steering assembly according to one or more of the preceding claims, wherein said outer liner comprises a tubular body having open ends associable with closing covers.

6. Steering assembly according to one or more of the preceding claims, wherein said outer liner comprises at least one passage opening of said fluid under pressure.

7. Steering assembly according to one or more of the preceding claims, wherein said outer liner comprises two of said passage openings obtained close to said open ends.

8. Steering assembly according to one or more of the preceding claims, wherein said stem comprises at least one rod that can be fitted longitudinally inside said outer liner and protruding from said open ends through said closing covers.

9. Steering assembly according to one or more of the preceding claims, wherein said stem comprises at least one enlarged portion sliding to measure inside said outer liner.

10. Steering assembly according to one or more of the preceding claims, wherein said enlarged portion is arranged at the substantially median section of said rod.

11. Steering assembly according to one or more of the preceding claims, wherein at least one of the ends of said stem is associable with one of said spindles by interposition of at least one connecting rod.

12. Steering assembly according to one or more of the preceding claims, wherein both the ends of said stem are associable with said spindles by interposition of at least two of said connecting rods.

13. Steering assembly according to one or more of the preceding claims, wherein said rotation means comprise at least one transversal pin associable with at least one of said ends of the axle.

14. Steering assembly according to one or more of the preceding claims, wherein at least one of said ends of the axle is fork shaped and has holes for fitting said transversal pin.

15. Steering assembly according to one or more of the preceding claims, wherein said rotation means comprise two of said transversal pins associable with said ends of the axle respectively.

16. Steering assembly according to one or more of the preceding claims, wherein both said ends of the axle are fork shaped and have holes for fitting said transversal pins.
